# EUROPEAN PATENT APPLICATION

(11) **EP 4 645 129 A1**
(43) Date of publication of application: **05.11.2025**
(21) Application number: 24193058.5
(22) Date of filing: 06.08.2024
(51) Int. Cl.: G06F 21/32, H04L 9/40, H04W 4/80, H04W 12/06

(54) **WIRELESS COMMUNICATION SYSTEM AND METHOD**

(30) Priority: 03.05.2024 IN 202441035184
(71) Applicant: NXP USA, Inc., Austin, TX 78735 (US)
(72) Inventor: Shirwal, Anand, 5656AG Eindhoven (NL); Rajan Kesavelu Shekar, Pramod, 5656 AG Eindhoven (NL)
(74) Representative: Miles, John Richard

(57) **Abstract**

A very short range wireless communication system and method is disclosed. The communication system includes a leader device and one or more follower devices. The leader device may establish a link only when the follower devices are in proximity. A user may provide authentication to one of the leader or follower devices which may then unlock the other of the leader or follower devices. Alternatively, the authentication may be provided to the other of the leader or follower devices as part of a two-factor authentication process.

## Description

### FIELD

This disclosure relates to a follower device configured for very short-range wireless communication to a leader device and a leader device configured for very short-range wireless communication to one or more follower devices. The disclosure further relates to a method of operating a leader device in communication with one or more follower devices and vice versa.

### BACKGROUND

Many voice-assisted devices are powered up and monitor every keyword. Such devices consuming power simply by being always on, listening for a keyword. Some devices may share the same keyword and when they are in close proximity this may result in all devices waking up and responding, requiring user interaction to turn off the selected devices not to respond which may result in unpredictable outcomes for the user.

Proximity based unlocking solutions are based on the proximity of the peripheral device for example a mobile device to a main device such as a laptop. These solutions use wireless technologies like Bluetooth to detect the presence of the peripheral device in the vicinity and unlocks the main device. However, the user intent to unlock the device is not verified, only the presence of the user's peripheral device unlocks the main device.

### SUMMARY

Aspects of the disclosure are defined in the accompanying claims. In a first aspect, there is provided a follower device comprising: a controller; a transceiver coupled to the controller, the transceiver configured for very short range point-to-point wireless communication; a linked device profile memory coupled to the controller; a follower device biometric signature memory coupled to the controller; an authentication unit coupled to the controller; a sensor unit coupled to the controller and configured to detect a user input; wherein the controller is further configured to: establish a wireless communication link with a leader device within range of the transceiver; update the linked device profile memory with a device profile of the leader device received via the transceiver; and wherein the controller is configured to: receive a biometric signature from the leader device via the transceiver; control the authentication unit to compare the received biometric signature with a reference signature the biometric signature memory; unlock the follower device in response to the received biometric signature matching the reference signature.

In a second aspect, there is provided a follower device comprising: a controller; a transceiver coupled to the controller, the transceiver configured for very short range point-to-point wireless communication; a linked device profile memory coupled to the controller; a follower device biometric signature memory coupled to the controller; an authentication unit coupled to the controller; a sensor unit coupled to the controller and configured to detect a user input; wherein the controller is configured to: establish a wireless communication link with a leader device within range of the transceiver; update the linked device profile memory with a device profile of the leader device received via the transceiver; and wherein the controller is configured to: receive an authentication request from the leader device via the transceiver; receive a user biometric input from the sensor unit; control the authentication unit to compare the received biometric signature with a reference signature the biometric signature memory; in response to the received biometric signature matching the reference signature unlock the follower device and transmit an authentication grant to the leader device via the transceiver.

In some embodiments, the follower device further comprises a follower device function module coupled to the controller; wherein the controller is further configured to: transmit a device attribute to the leader device via the transceiver, the device attribute corresponding to the follower device function module; and receive a follower device function module disable command from the leader device via the transceiver; and disable the follower device function module.

In some embodiments, the controller is further configured to enable the follower device function module in response to the communication link being dropped. In some embodiments, the follower device function module comprises a voice command processing unit and the device attribute comprises a wake-up keyword.

In some embodiments, the controller is further configured to: receive a wakeup command from the leader device, the wakeup command being transmitted from the leader device in response to a keyword being detected by the leader device function module.

In some embodiments, the transceiver is configured as a wireless USB transceiver.

In a third aspect, there is provided a leader device comprising: a controller; a first transceiver coupled to the controller, the transceiver configured for very short range point-to-point wireless communication; a second transceiver configured to be coupled to a network server; a linked device profile memory coupled to the controller; a leader device biometric signature memory coupled to the controller; an authentication unit coupled to the controller; a sensor unit coupled to the controller and configured to detect a user input; wherein the controller is configured to: establish a wireless communication link with a follower device within range of the transceiver; update the linked device profile memory with a device profile of the follower device received via the transceiver; and wherein the controller is configured to: receive a user input access request via the sensor unit; control the authentication unit to authenticate the user input access request; in response to the access request being authenticated, permit access to the leader device; and transmit the authenticated access request via the transceiver to the follower device.

In a fourth aspect, there is provided a leader device comprising: a controller; a first transceiver coupled to the controller, the transceiver configured for very short range point-to-point wireless communication; a second transceiver configured to be coupled to a network server; a linked device profile memory coupled to the controller; a leader device biometric signature memory coupled to the controller; an authentication unit coupled to the controller; a sensor unit coupled to the controller and configured to detect a user input; wherein the controller is configured to: establish a wireless communication link with a leader device within range of the transceiver; update the linked device profile memory with a device profile of the leader device received via the transceiver; and wherein the controller is configured to: receive a user input access request via the sensor unit; receive a first authentication of the user input access request from the network server; in response to the first authentication, transmit a request for a second authentication via the first transceiver to the follower device; in response to receiving the second authentication from the follower device via the first transceiver authenticate the user request.

In some embodiments, the leader device further comprises: a leader device function module coupled to the controller and configured to: determine from the device attribute whether the leader device function module has an equivalent function to a follower device function module; and, in response to determining that leader device function module has an equivalent function to the follower device function module, transmit a follower device function module disable command to the follower device via the transceiver.

In some embodiments, the leader device function module and the follower device function module comprise a voice command processing unit and wherein the device attribute comprises a wakeup keyword.

In some embodiments, the controller is further configured to: detect a wakeup keyword from the voice command processing unit; and in response to determining that the wakeup keyword is for the follower device, transmit a wakeup command to the follower device.

In some embodiments, of the leader device the transceiver is configured as a wireless USB transceiver.

Embodiments of the leader device and the follower device may be included in a system.

In a fifth aspect, there is provided a method of operating a follower device, the follower device comprising a transceiver configured for very short range point-to-point wireless communication, a linked device profile memory, a follower device biometric signature memory, an authentication unit, and a sensor unit configured to detect a user input, the method comprising: establish a wireless communication link with a leader device within range of the transceiver; updating the linked device profile memory with a device profile of the leader device received via the transceiver; receiving a biometric signature from the leader device via the transceiver; authenticating the received biometric signature with a reference signature; and unlocking the follower device in response to the received biometric signature matching the reference signature.

In a sixth aspect, there is provided a method of operating a follower device, the follower device comprising a transceiver configured for very short range point-to-point wireless communication, a linked device profile memory, a follower device biometric signature memory, an authentication unit, and a sensor unit configured to detect a user input, the method comprising: establishing a wireless communication link with a leader device within range of the transceiver; updating the linked device profile memory with a device profile of the leader device received via the transceiver; receiving an authentication request from the leader device via the transceiver; receiving a user biometric input from the sensor unit; controlling the authentication unit to compare the received biometric signature with a reference signature the biometric signature memory; in response to the received biometric signature matching the reference signature unlocking the follower device and transmitting an authentication grant to the leader device via the transceiver.

In a seventh aspect, there is provided a method of operating a leader device, the leader device comprising: a transceiver configured for very short range point-to-point wireless communication, a network transceiver, a linked device profile memory, a leader device biometric signature memory, an authentication unit, and a sensor unit configured to detect a user input, the method comprising: establishing a wireless communication link with a follower device within range of the transceiver; updating the linked device profile memory with a device profile of the follower device received via the transceiver; receiving a user input access request via the sensor unit; authenticating the user input access request; in response to the access request being authenticated, permitting access to the leader device; and transmitting the authenticated access request via the transceiver to the follower device.

In an eighth aspect, there is provided a method of operating a leader device, the leader device comprising: a transceiver configured for very short range point-to-point wireless communication, a network transceiver, a linked device profile memory, a leader device biometric signature memory, an authentication unit, and a sensor unit configured to detect a user input, the method comprising: establishing a wireless communication link with a leader device within range of the transceiver; updating the linked device profile memory with a device profile of the leader device received via the transceiver; receiving a user input access request via the sensor unit; receiving a first authentication of the user input access request from the network server; in response to the first authentication, transmitting a request for a second authentication via the first transceiver to the follower device; in response to receiving the second authentication from the follower device via the first transceiver authenticating the user request.

In some embodiments a method of operating a system may include the methods of operating a leader device and a follower device according to any of the fifth aspect, sixth aspect, seventh aspect and eighth aspect.

### BRIEF DESCRIPTION OF THE DRAWINGS

In the figures and description like reference numerals refer to like features. Embodiments are now described in detail, by way of example only, illustrated by the accompanying drawings in which:

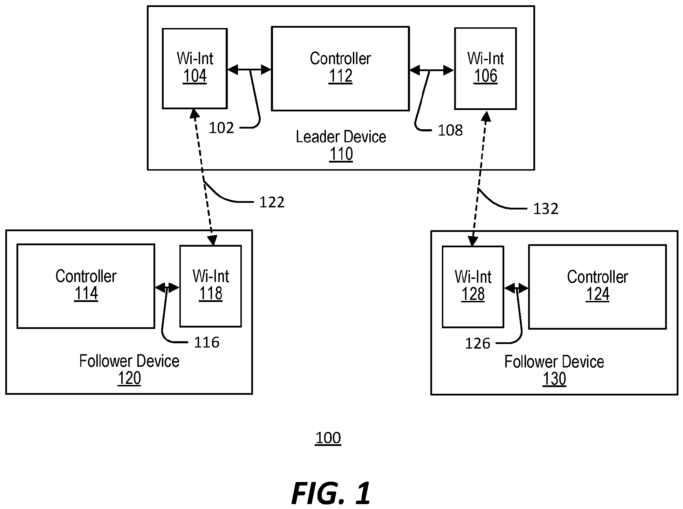

Figure 1 shows a system including a leader device and two follower devices configured for very short range communication according to an embodiment.
Figure 1 shows a system including a leader device and two follower devices configured for very short range communication according to an embodiment.
Figure 2 illustrates a very short range communication module for a leader device or a follower device according to an embodiment.
Figure 3 illustrates a system including a leader device and two follower devices configured for very short range communication according to an embodiment.
Figure 4 shows a method of operating a leader device configured for very short range communication with a follower device according to an embodiment.
Figure 5 shows a method of operating a follower device configured for very short range communication with a leader device according to an embodiment.
Figure 6 shows a method of operating a leader device configured for very short range communication with a follower device according to an embodiment.
Figure 7 illustrates a system including a leader device and two follower devices configured for very short range communication according to an embodiment.
Figure 8A and figure 8B shows an authentication method for a leader device configured for very short range communication with a follower device according to an embodiment.
Figure 9A and figure 9B shows an authentication method for a follower device configured for very short range communication with a leader device according to an embodiment.
Figure 10A and figure 10B shows an authentication method for a follower device configured for very short range communication with a leader device according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments

### DETAILED DESCRIPTION OF EMBODIMENTS

Figure 1 shows a system 100 including a leader device 110 and two follower devices 120, 130 configured for very short-range communication according to an embodiment. Examples of a leader device or follower device may include a laptop PC, mobile device, tablet, wearable device. The determination of which device is configured as a leader device or follower device may be done is during the formation of the communication link. The leader device 110 includes a controller 112, a first short range wireless communication interface (Wi_Int) 104 connected via connection 102 to the controller 112 and a second short range wireless communication interface (Wi_Int) 106 connected via connection 108 to the controller 112. The first follower device 120 includes a controller 114, a first short range wireless communication interface (Wi_Int) 118 connected via connection 116 to the controller 114 and wirelessly connected via connection 122 to the leader device 110. The second follower device 130 includes a controller 124, a short range wireless communication interface (Wi_Int) 128 connected via connection 126 to the controller 124 and wirelessly connected via connection 132 to the leader device 110.

Wi-INT technology as referred to herein is for very short range point-to point wireless interfacing to systems which may replace wired connectors internal flex cable replacement and providing wireless connectivity. The expression very short range in the present disclosure is considered to be a distance of less than 5 centimetres. The Wi-Int modules may use millimetre wave frequencies for wireless connectivity. The Wi-Int modules 104, 106, 118, 128 may include an aggregator subsystem to interface to various wired interface technologies such as USB, UART, Display Port. Wi-Int module 200 may have data rates which may be for example up to a rate of 10 Gbits/sec with a low latency for example approximately 100 nanoseconds. The disparate data streams are aggregated into a single aggregated data stream having a defined RF Frame structure. This aggregated stream data is exchanged with a modem subsystem.

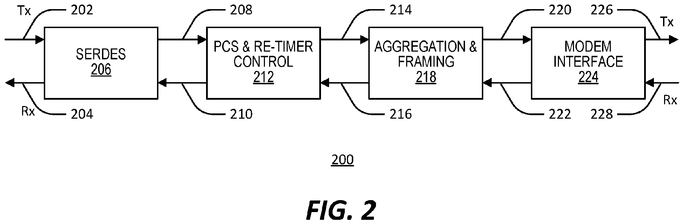

Figure 2 illustrates a very short range Wi-Int communication module 200 for a leader device or a follower device according to an embodiment. Wi-Int module 200 has a transmit path from a serial digital input 202 to a transmit output 226. Wi-Int module 200 has a receive path from a receive input 228 to a serial digital output 204.

A data stream for transmission may be input on transmit input 202 to serializer deserializer (SERDES) block 206. An output 208 of the SERDES block 206 may be connected to a PCS and re-timer control block 212 which may be used for example for USB data. For example the USB3.2 standard's Appendix E defines repeater / re-timer specification to extend the USB cable length, the Wi-INT module 200 may support data transfer speeds of over 1 Gb per second. In some examples the Wi-INT module may operate at data transfer rates of 5 Gbps o 10 Gbps speeds. An output 214 of the PCS and re-timer controller 212 may be input to an aggregation and framing module 218 which aggregates and frames the high speed and low speed data for transmission. An output 220 of the aggregation and framing module is connected to an input of a modem interface 224. The modem interface 224 may convert a parallel data stream coming from aggregation module 218 to a 2-bit stream as required by the modem (not shown). An output of the modem interface is connected to the transmit output 226 which is connected to a modem (not shown) which is part of the millimeter Wave RF subsystem (not shown). The RF subsystem converts the data to RF signal for transmission, a received signal is converted by RF subsystem (not shown) to a received data stream which may be received on receive input 228 connected to the modem interface 224. The data is provided on output 222 to the aggregation module 218 which disaggregates the received data using the packet structure. The aggregation module 218 outputs the data to the PCS and re-timer module 212 on output 216. The PCS and re-timer module 212 may condition the received data and provide the retimed data on output 210 to the SERDES module 206 which serializes the parallel data. The resulting data stream is output on the serial data output 204.

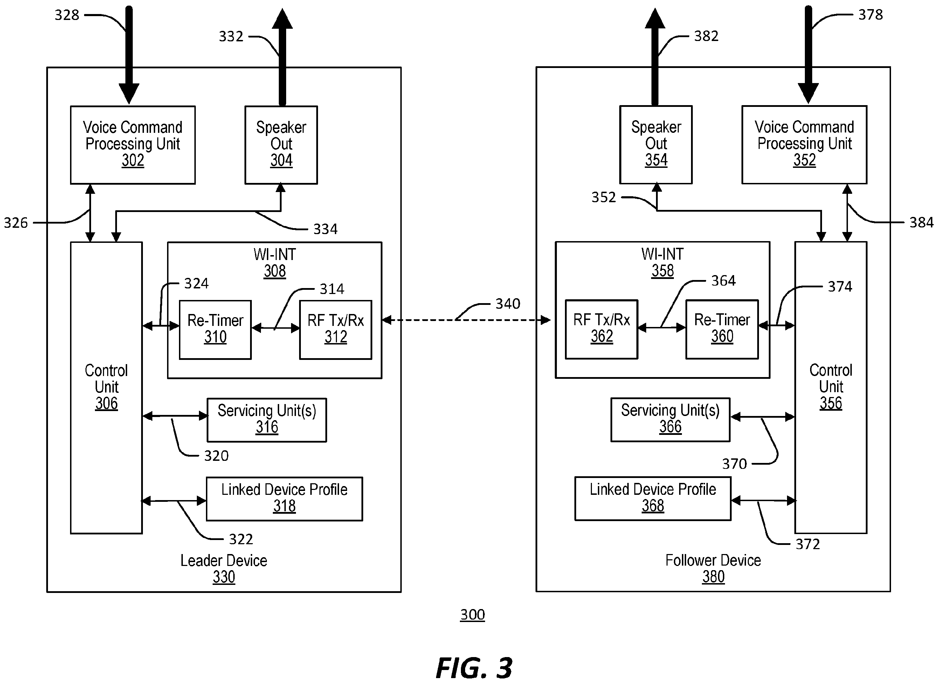

Figure 3 shows a system 300 including a leader device 330 and a follower device 380 according to an embodiment. The leader device 330 includes a control unit 306 which may also be referred to herein as a controller. The control unit 306 has a connection 326 to a voice command processing unit 302 having a voice command (microphone) input 328. The control unit 306 has a connection 334 to a loudspeaker interface ( speaker out) 354 having an output 332. The control unit 306 has a connection 324 to a re-timer 310 which is part of a Wi-INT module 308. The Wi-Int module 308 also includes a RF transceiver subsystem 312 having a connection 314 to the re-timer module 310. The control unit 306 also has a connection 320 to one or more servicing units 316 which may for example be implemented as firmware executable by a processor which may be part of the control unit 306. The control unit 306 has a connection 322 to a memory 318 configured to store device profile(s) of any linked device or devices.

The follower device 380 includes a control unit 356 which may also be referred to herein as a controller. The control unit 356 has a connection 376 to a voice command processing unit 352 having a voice command (microphone) input 378. The control unit 356 has a connection 384 to a loudspeaker interface ( speaker out) 354 having an output 382. The control unit 356 has a connection 374 to a re-timer 360 which is part of a Wi-INT module 358. The Wi-Int module 358 also includes a RF transceiver subsystem 362 having a connection 364 to the re-timer module 360. The control unit 356 also has a connection 370 to a servicing unit 366. The control unit 356 has a connection 372 to a memory 368 configured to store device profile(s) of any linked device or devices.

In some examples, the voice command processing units 302, 352 may be omitted and other functional units such as for example a lighting controller, an environmental sensor input or other functional interface. In some examples of system 300, the leader device 350 may for example be a laptop and the follower device 380 may be a mobile phone. The roles of leader device and follower device(s) may be determined when the wireless connection 340 between the devices 330, 380 is formed. In some examples, the leader device is determined during wiring connection. The devices 330, 380 may perform information exchange to exchange attributes. The highest capability device may be the leader device. If all devices have some capability, then the device initiating a transaction may be the leader. In some examples the leader device or follower device may have more than one wi-int modules 308, 358. This may allow daisy chaining of leader and follower devices.

The system 300 allows a wireless data interface system between the leader device 330 and the follower device 380. In one example mode of operation, a high-speed wireless data communication may be set up via link 340 after an initial linking and training process between the leader device 330 and the follower device 380. The leader device 330 requests the functional capabilities (device attributes) of the follower device 380. The follower device 380 transmits its capabilities to the leader device 330. The leader device 330 checks if the wirelessly attached follower device 380 is capable of voice assist feature i.e. the voice command processing units 302, 352 have equivalent functionality. If the follower device 380 for example is capable of a voice assist, then the Wake-up Keyword for follower device may be stored for example as part of the linked device profile in the memory 318. The leader device 330 may transmit a command to disable the voice assist feature of the follower device 380. The voice assist feature may include voice input processing 302, microphone input 328, speaker out module 304.

An input user voice command is recognized by the enabled voice command processing unit 302 in leader device 330 and checks for the wake-up keyword. If the keyword matches with the stored wi-int linked devices wake-up keyword, then the corresponding device is enabled to service the user command. If a new (follower) device is linked to leader device 330, a similar process may occur. The voice assist feature of the connected follower devices remains enabled until the wi-int link is active, i.e. the device is in close proximity to the leader device. When the wi-int link is disabled the voice assist feature of the corresponding follower devices gets set to the default / active state.

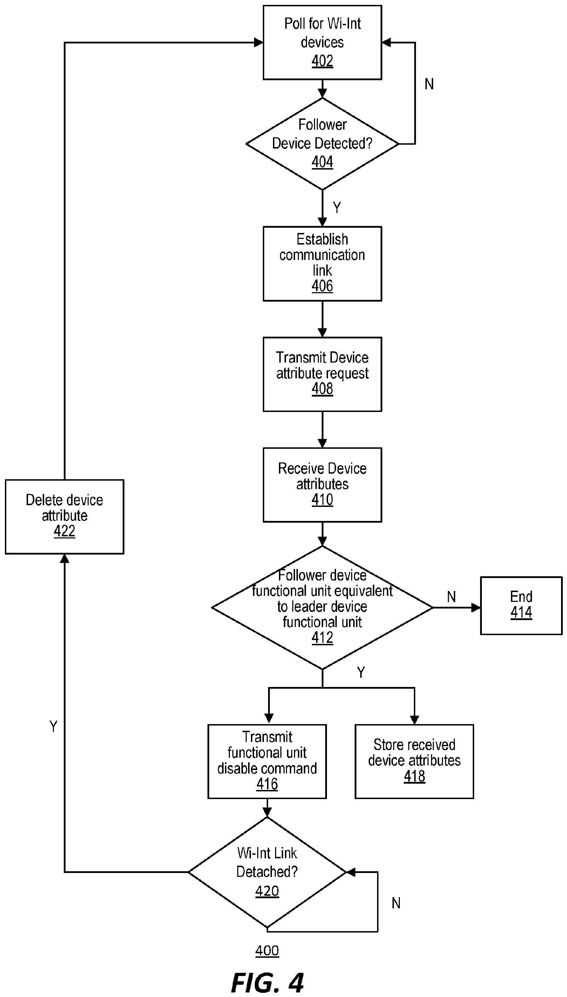

Figure 4 shows a method of operating a leader device 400 according to an embodiment. The leader device may for example be leader device 330. The method 400 may for example be implemented by control unit or controller 306 which may be implemented in hardware or by software running on a processor. In step 402, the leader device 330 may poll for devices with a very-short range wireless interface by transmitting a signal for device detection and/or receiving a signal for device detection and checks if a follower device has been detected in step 404. If a device has not been detected, the method returns to step 402. Otherwise, if a follower device has been detected then in step 406 a communication link is established by link training. The communication link may be established in less than 1 millisecond. The leader device may request the device attribute in step 408 and receive the device attributes in step 410. In step 412, the method checks if a follower device functional unit has equivalent functionality to a functional unit in the leader device. The functional unit may for example be a voice command processing unit or some other function. If the functionality is not equivalent, the method ends in step 414. If the functionality is equivalent, then in step 418 the follower device attributes may be stored and in step 416 a functional unit disable command may be transmitted to the follower device. Following from step 416 in step 420 the method proceeds to step 420 and checks if the wireless link has become detached. If the link has been detached, then in step 422 the follower device attribute is deleted and the mothed returns to step 402. Otherwise, the method remains at step 420.

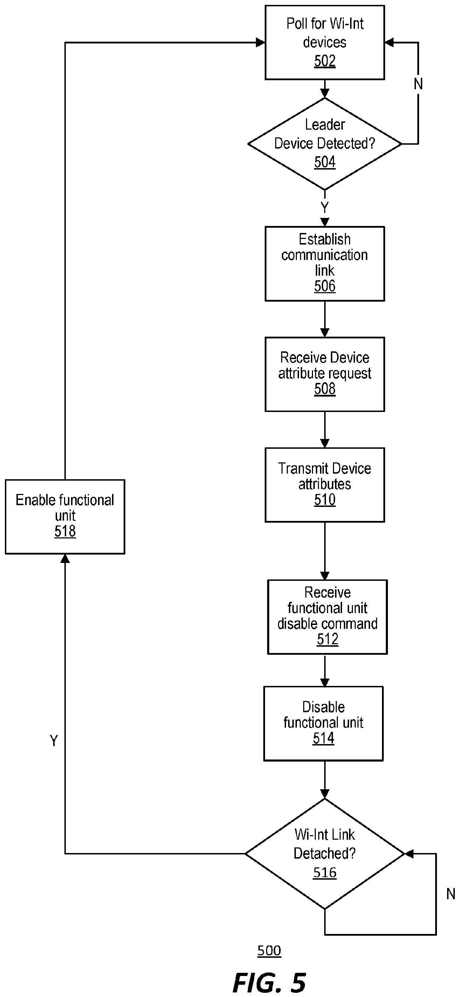

Figure 5 shows a method of operating a follower device 500 according to an embodiment. The follower device may for example be follower device 380 are any other device with a very short range high speed wireless communication interface. The method 500 may for example be implemented by control unit 356 which may be implemented in hardware or by software running on a processor. In step 502, the follower device may poll for devices with a very-short range wireless interface by transmitting a signal for device detection and/or receiving a signal for device detection and checks if a follower device has been detected in step 504. If a device has not been detected, the method returns to step 502. Otherwise, if a leader device has been detected then in step 506 a communication link is established by link training. The follower device may receive a device attribute request in step 508 and transmit the device attribute(s) over the very short range communication link in step 510. The device attribute(s) may include the functional unit or units present in the device, for example voice command units. In step 512, a functional unit disable command may be received from a leader device via the very short range wireless communication link. The functional unit is then disabled in step 514. In step 516, the method checks if the wireless link has become detached. If the link has been detached, then in step 518, the functional unit is enabled and the method returns to step 502. Otherwise, the method remains at step 516.

The system 300 and methods 400, 500 allow leader and follower devices to form an implicitly connection when the devices are in close proximity and then check for the presence of equivalent functional units within the system and disable all but one of the equivalent functional units. This may reduce the overall power consumption of the system 300.

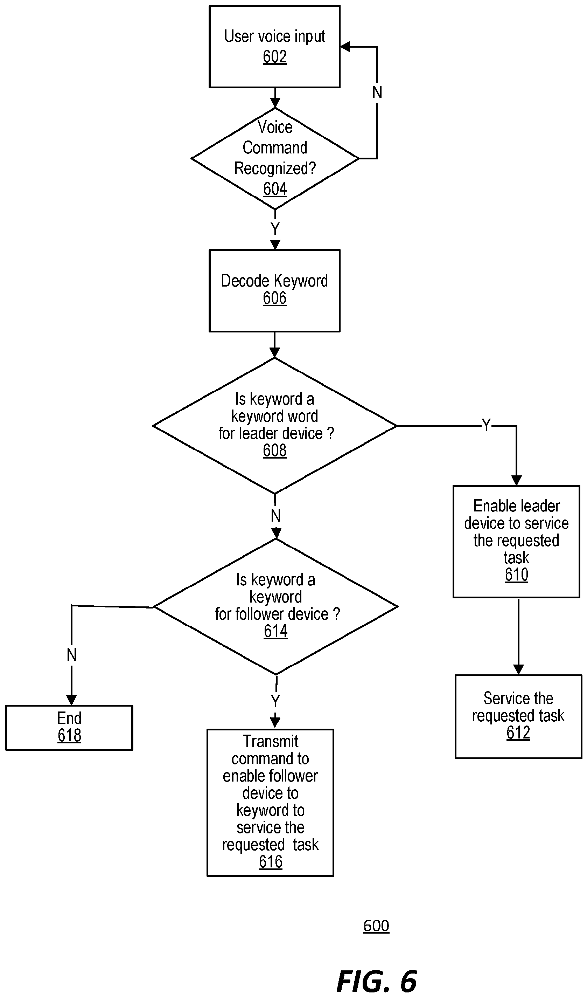

Figure 6 shows a method for detecting a keyword input 600 according to an embodiment. Method 600 uses a voice processing functional unit in a leader device, the equivalent functional units in the follower devices are disabled. Method 600 may be implemented for example by system 300, and methods 400 and 500. In step 602 a user voice input may be detected for example by. In step 604, the method may check whether a voice command is recognized. If a voice command is not recognized, the method returns to step 602. If a voice command is recognized, then in step 606 a keyword is decoded. In step 608, the method checks whether the keyword is a keyword word for the leader device. If the keyword is a keyword for the leader device, then in step 610 the leader device is enabled to service the requested task (step 612). This may be done for example by enabling one or more of the servicing units 316. Returning to step 608, if the keyword is not a keyword for the leader device, then in step 614 the method checks whether the keyword is a keyword word for any connected follower device. The follower device keywords may be stored for example in the linked device profile memory 318 which may be included as part of the follower device attributes retrieved from the follower device during setup of the communication link. If the keyword is a keyword for a follower device, then in step 616, the command is transmitted to the connected follower device to enable the follower device to service the requested task. This may be done for example by the follower device enabling one or more of the servicing units 366. If the keyword is not a keyword for a follower device, the method ends (step 618).

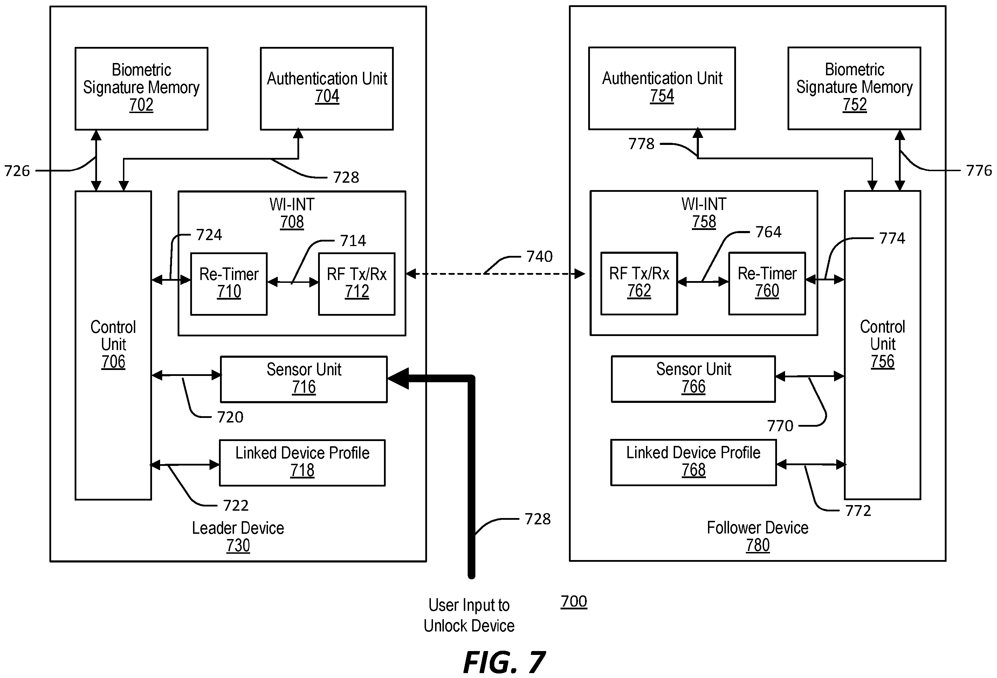

Figure 7 shows a system 700 including a leader device 730 and a follower device 780 according to an embodiment. The leader device 730 includes a control unit 706 which may also be referred to herein as a controller. The control unit 706 may control and direct the actions as requested by a user of the device 730, unlock the device 730 and interact with other blocks.

The control unit 706 has a connection 726 to a biometric signature memory 702. The control unit 706 has a connection 728 to an authentication unit 704 which may check for the authentication of received biometric signature with the pre-loaded Signature and upon successful authentication, signals the device can be unlocked to control unit 706. The control unit 706 has a connection 724 to a re-timer 710 which is part of a Wi-INT module 708. The Wi-Int module 708 also includes a RF transceiver subsystem 712 having a connection 714 to the re-timer module 710. The control unit 706 also has a connection 720 to a sensor unit 716. The sensor unit may include for example one or more of a fingerprint sensor, a face ID sensor, a keypad, or a voice input sensor for example to sense a user input for unlocking the device. The control unit 706 has a connection 722 to a memory 718 configured to store device profile(s) of any linked device or devices.

The follower device 780 includes a control unit 756 which may also be referred to herein as a controller. The control unit 756 may control and direct the actions as requested by a user of the device 780, unlock the device 780 and interact with other blocks. The control unit 756 has a connection 776 to a biometric signature memory 752. The control unit 756 has a connection 778 to an authentication unit 754 which may check for the authentication of received biometric signature with the pre-loaded signature and upon successful authentication, signals that the device can be unlocked to control unit 756. The control unit 756 has a connection 774 to a re-timer 760 which is part of a Wi-INT module 758. The Wi-Int module 758 also includes a RF transceiver subsystem 762 having a connection 764 to the re-timer module 760. The control unit 756 also has a connection 770 to a sensor unit 766. The sensor unit may include for example one or more of a fingerprint sensor, a face ID sensor, a keypad, or a voice input sensor for example to sense a user input for unlocking the device. The control unit 756 has a connection 772 to a memory 768 configured to store device profile(s) of any linked device or devices.

The system 700 may implement a very short range wireless data link 740 is enabled between leader device 730 and follower device 780 when both devices are in close proximity. In some examples leader device 730 may be a laptop and follower device 780 may be a mobile phone. The high speed wireless data communication link 740 is setup after the initial Linking and Training Process between leader device 730 and follower device 780.

In one example operation a user input received on sensor input 728 may unlock the leader device 780. After sensing the input by sensor unit 716, a biometric signature is checked for authenticity with the stored signature in biometric signature memory 702 and unlocks the device if signature matches. The leader device 730 may records the recent unlock mode of the leader device 730 and check if there are any pre-configured follower devices linked through the Wi-Int module 708. This may be done for example by checking the linked device profiles in memory 718. The controller 706 may transmit the recent unlock signature used for the leader device 730 with the linked follower device 780. The unlock Signature which may be for example a fingerprint unlock signature is transferred from leader device 730 to follower device 780 through the wi-int link 740. The follower device 780 checks for the authenticity of the received signature and performs unlocking of the device if the signature matches, thereby enabling, unlocking of the devices for the linked wi-int devices 730, 780.

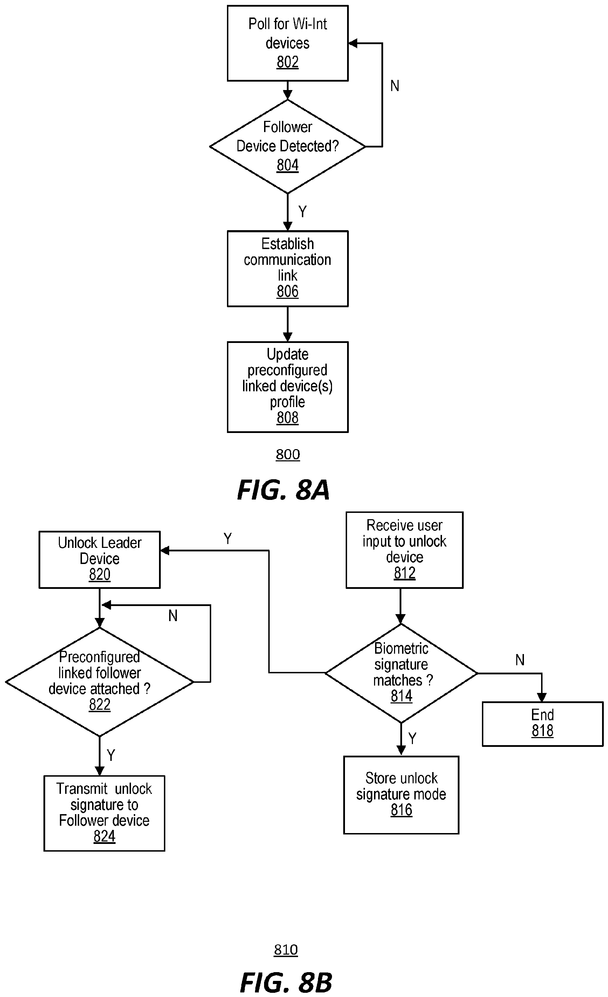

Figure 8A and figure 8B show a method of operation of a leader device, for example leader device 730. Referring first to method 800 of figure 8A, in step 802, the leader device may poll for devices with a very-short range wireless interface by transmitting a signal for device detection and/or receiving a signal for device detection and checks if a follower device has been detected in step 804. If a device has not been detected, the method returns to step 802. Otherwise, if a follower device has been detected then in step 806 a communication link is established by link training. Following step 806, preconfigured linked device profiles may be updated in step 808. This may be done for example by transmitted requests for linked device attributes and receiving the device attributes via the wireless link 740 similar as previously described for example in method 400.

Referring now to method 810 of figure 8B, in step 812 a user input to unlock the leader device is received. In step 814 a check is made to see whether the biometric signature matches. If it does not match, the method ends in step 818. Otherwise, if the signature matches then in step 816 the unlock signature mode may be stored and in step 820 the leader device is unlocked. Following from step 820 in step 822 the method checks if a preconfigured linked follower device is attached. If it is attached, then the unlock signature is transmitted to a linked follower device (step 824). Otherwise, the check at step 822 is repeated.

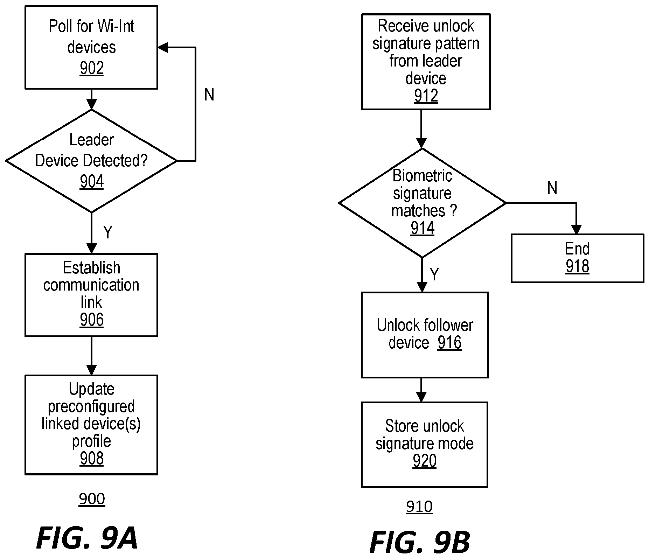

Figure 9A and figure 9B show a method of operation of a follower device, for example follower device 780. Referring first to method 900 of figure 9A, in step 902, the follower device may poll for devices with a very-short range wireless interface by transmitting a signal for device detection and/or receiving a signal for device detection and checks if leader device has been detected in step 904. If a device has not been detected, the method returns to step 902. Otherwise, if a leader device has been detected then in step 906 a communication link is established by link training. Following step 906, preconfigured linked device profiles may be updated in step 908. This may be done for example by transmitted requests for linked device attributes and receiving the device attributes via the wireless link 740.

Referring now to method 910 of figure 9B, in step 912 a user input to unlock the leader device is received. In step 914 a check is made to see whether the biometric signature matches. If it does not match, the method ends in step 918. Otherwise, if the signature matches then in step 916 the follower device is unlocked. Following from step 916 in step 920 the unlock signature may be stored. In some examples, of the follower device has multiple wi-int modules, the stored unlock signature may be transmitted to unlock a further linked follower device.

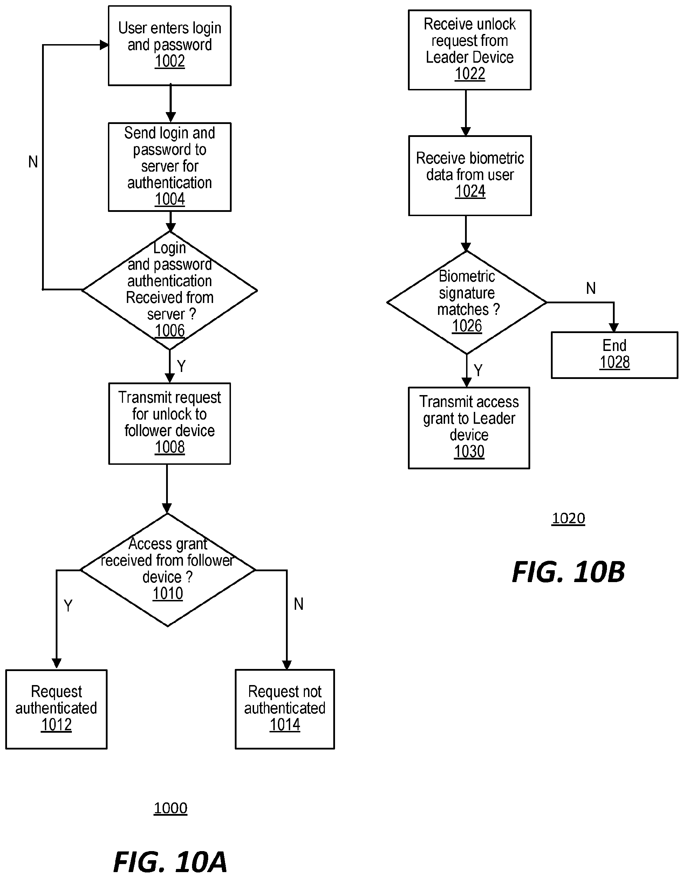

Figure 10A and figure 10B shows a method of two-factor authentication according to an embodiment. Figure 10A shows the leader method 1000 and figure 10B shows the follower method 1020. The methods 1000, 1020 may be implemented for example by leader device 730 and follower device 780 in system 700. Referring to figure 10A, in step 1002, a user may enter login and password credentials. In step 1004 the login and password may be transmitted to a login server for authentication via a network transceiver (not illustrated). In step 1006 if authentication is not received, the method returns to step 1002. Otherwise, in step 1006 if authentication is received, then in step 1008 a request to unlock the device is transmitted to a linked follower device via the wi-int interface. In step 1010 the leader device checks if an access grant has been received from a linked follower device via the wi-int interface. If no grant is received, then in step 1014 the request is not authenticated and the login fails. Otherwise, if access grant has been received from a linked follower device, then the request is authenticated (step 1012). Turning now to follower method 1020 in figure 10B, in step 1022 an unlock request is received from a leader device connected via the wi-int link. In step 1024, biometric data may be received from a user. In step 1026 the follower device checks if the biometric signature matches. If it does not match the method ends (step 1028). Otherwise, an access grant is transmitted to the leader device (step 1030) via the wi-int link.

A very short range wireless communication system and method is disclosed. The communication system includes a leader device and one or more follower devices. The leader device may establish a link only when the follower devices are in proximity. The leader device may determine that one or more follower devices each have a functional module with an equivalent functionality to a functional module in the leader device. The leader device may disable the functional modules in the follower devices. The functional module of the leader device in the system is used instead of the follower device functional modules which may reduce power in the system.

A very short range wireless communication system and method is disclosed. The communication system includes a leader device and one or more follower devices. The leader device may establish a link only when the follower devices are in proximity. A user may provide authentication to one of the leader or follower devices which may then unlock the other of the leader or follower devices. Alternatively, the authentication may be provided to the other of the leader or follower devices as part of a two-factor authentication process.

Embodiments disclosed herein use a very short range wireless interface which establishes a proximity based region of trust between connected devices. This allows one of the devices authenticate a user for all devices and also for devices with equivalent functional modules to share one of the modules which may avoid duplicate functionality being used and so reduce power consumption.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A follower device comprising:
a controller;
a transceiver coupled to the controller, the transceiver configured for very short range point-to-point wireless communication;
a linked device profile memory coupled to the controller;
a follower device biometric signature memory coupled to the controller;
an authentication unit coupled to the controller;
a sensor unit coupled to the controller and configured to detect a user input;
wherein the controller is further configured to:
control the wireless transceiver to establish a wireless communication link with a leader device within range of the transceiver;
update the linked device profile memory with a device profile of the leader device received via the transceiver; and wherein the controller is further configured to:
receive a biometric signature from the leader device via the transceiver;
control the authentication unit to compare the received biometric signature with a reference signature the biometric signature memory; and
unlock the follower device in response to the received biometric signature matching the reference signature.

2. A follower device comprising:
a controller;
a transceiver coupled to the controller, the transceiver configured for very short range point-to-point wireless communication;
a linked device profile memory coupled to the controller;
a follower device biometric signature memory coupled to the controller;
an authentication unit coupled to the controller;
a sensor unit coupled to the controller and configured to detect a user input;
wherein the controller is configured to:
control the wireless transceiver to establish a wireless communication link with a leader device within range of the transceiver;
update the linked device profile memory with a device profile of the leader device received via the transceiver; and wherein the controller is configured to:
receive an authentication request from the leader device via the transceiver;
receive a user biometric input from the sensor unit;
control the authentication unit to compare the received biometric signature with a reference signature the biometric signature memory;
in response to the received biometric signature matching the reference signature unlock the follower device and transmit an authentication grant to the leader device via the transceiver.

3. The follower device of any preceding claim, further comprising:
a follower device function module coupled to the controller;
wherein the controller is further configured to:
transmit a device attribute to the leader device via the transceiver, the device attribute corresponding to the follower device function module; and
receive a follower device function module disable command from the leader device via the transceiver; and
disable the follower device function module.

4. The follower device of claim 3, wherein the controller is further configured to enable the follower device function module in response to the communication link being dropped.

5. The follower device of any of claims 3 or 4, wherein the follower device function module comprises a voice command processing unit and the device attribute comprises a wake up keyword.

6. The follower device of any of claims 3 to 5, wherein the controller is further configured to:
receive a wakeup command from the leader device, the wakeup command being transmitted from the leader device in response to a keyword being detected by the leader device function module.

7. A leader device comprising:
a controller;
a first transceiver coupled to the controller, the transceiver configured for very short range point-to-point wireless communication;
a second transceiver configured to be coupled to a network server;
a linked device profile memory coupled to the controller;
a leader device biometric signature memory coupled to the controller;
an authentication unit coupled to the controller;
a sensor unit coupled to the controller and configured to detect a user input;
wherein the controller is configured to:
control the wireless transceiver to establish a wireless communication link with a follower device within range of the transceiver;
update the linked device profile memory with a device profile of the follower device received via the transceiver; and wherein the controller is configured to:
receive a user input access request via the sensor unit;
control the authentication unit to authenticate the user input access request;
in response to the access request being authenticated, permit access to the leader device; and
transmit the authenticated access request via the transceiver to the follower device.

8. A leader device comprising:
a controller;
a first transceiver coupled to the controller, the transceiver configured for very short range point-to-point wireless communication;
a second transceiver configured to be coupled to a network server;
a linked device profile memory coupled to the controller;
a leader device biometric signature memory coupled to the controller;
an authentication unit coupled to the controller;
a sensor unit coupled to the controller and configured to detect a user input;
wherein the controller is configured to:
control the wireless transceiver to establish a wireless communication link with a leader device within range of the transceiver;
update the linked device profile memory with a device profile of the leader device received via the transceiver; and wherein the controller is configured to:
receive a user input access request via the sensor unit;
receive a first authentication of the user input access request from the network server;
in response to the first authentication, transmit a request for a second authentication via the first transceiver to the follower device;
in response to receiving the second authentication from the follower device via the first transceiver authenticate the user request.

9. The leader device of claims 7 or 8 further comprising:
a leader device function module coupled to the controller and configured to:
determine from the device attribute whether the leader device function module has an equivalent function to a follower device function module;
and, in response to determining that leader device function module has an equivalent function to the follower device function module, transmit a follower device function module disable command to the follower device via the transceiver.

10. The leader device of claim 8, wherein the leader device function module and the follower device function module comprise a voice command processing unit and wherein the device attribute comprises a wakeup keyword.

11. The leader device of claim 9, wherein the controller is further configured to:
detect a wakeup keyword from the voice command processing unit; and
in response to determining that the wakeup keyword is for the follower device, transmit a wakeup command to the follower device.

12. A system comprising the leader device of any of claims 7 to 11 and the follower device of any of claims 1 to 6.

13. A method of operating a follower device, the follower device comprising a transceiver configured for very short range point-to-point wireless communication, a linked device profile memory, a follower device biometric signature memory, an authentication unit, and a sensor unit configured to detect a user input, the method comprising:
establishing a wireless communication link with a leader device within range of the transceiver;
updating the linked device profile memory with a device profile of the leader device received via the transceiver;
receiving a biometric signature from the leader device via the transceiver;
authenticating the received biometric signature with a reference signature; and
unlocking the follower device in response to the received biometric signature matching the reference signature.

14. A method of operating a leader device, the leader device comprising:
a transceiver configured for very short range point-to-point wireless communication, a network transceiver, a linked device profile memory, a leader device biometric signature memory, an authentication unit, and a sensor unit configured to detect a user input, the method comprising:
establishing a wireless communication link with a follower device within range of the transceiver;
updating the linked device profile memory with a device profile of the follower device received via the transceiver;
receiving a user input access request via the sensor unit;
authenticating the user input access request;
in response to the access request being authenticated, permitting access to the leader device; and
transmitting the authenticated access request via the transceiver to the follower device.

15. A method of operating a system comprising a leader device and a follower device according to the method of claims 13 and 14.
